Europäisches Patentamt

European Patent Office

Office européen des brevets

(11) Veröffentlichungsnummer: **0 045 893**
**B1**

(12) EUROPÄISCHE PATENTSCHRIFT

(45) Veröffentlichungstag der Patentschrift:
09.05.84

(21) Anmeldenummer: 81105908.8

(22) Anmeldetag: 27.07.81

(51) Int. Cl.³: **E 04 B  1/66,** B 32 B  15/04

(54) Dichtungsbahnen und ihre Verwendung als Bauwerkabdichtungen.

(30) Priorität: 09.08.80  DE 3030276

(43) Veröffentlichungstag der Anmeldung:
17.02.82 Patentblatt 82/7

(45) Bekanntmachung des Hinweises auf die Patenterteilung:
09.05.84 Patentblatt 84/19

(84) Benannte Vertragsstaaten:
AT BE CH DE FR GB IT LI LU NL SE

(56) Entgegenhaltungen:
DE - A - 2 218 564
DE - A - 2 648 966
DE - U - 7 417 289
DE - U - 7 724 717
FR - A - 2 063 734
FR - A - 2 111 796

(73) Patentinhaber: Wolff Walsrode Aktiengesellschaft,
Postfach, D-3030 Walsrode 1 (DE)

(72) Erfinder: Fuchs, Günther, Freudenthalstrasse 26,
D-3032 Fallingbostel 1 (DE)
Erfinder: Langendorf, Klaus, Fliederweg 5,
D-6831 Altlussheim (DE)
Erfinder: Preiss, Holger, Nr.29, D-2131 Kettenburg (DE)
Erfinder: Tempel, Gerhard, Mengebostel 20,
D-3032 Fallingbostel 2 (DE)

(74) Vertreter: Kutzenberger, Helga, Dr. et al, c/o Bayer AG
Zentralbereich Patente Marken und Lizenzen,
D-5090 Leverkusen 1, Bayerwerk (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Dichtungsbahnen, die eine Sperrschicht aus mindestens einer Kunststoff-Metall-Verbundfolie enthalten.

Es ist bekannt, dass Dichtungsbahnen, insbesondere bituminöse Dachbahnen, 100 bis 200 μ dicke Metallbänder als Sperrschicht enthalten (z.B. DE-U Nr. 7417289).

Vorzugsweise wird eine Aluminiumfolie in 100 μ Dicke als Sperrschicht eingesetzt. Dabei werden verschiedene Qualitäten, nach Reinheitsgraden unterschieden, verwendet. Ausserdem kann die Oberfläche der Metallfolie glatt oder, zur besseren Verbundhaftung gegenüber Bitumen, geprägt sein.

Der Einsatz von Aluminiumfolien im Dickenbereich um 100 μ und stärker ist nicht optimal, da im Verhältnis zum Nutzen zuviel Material verbraucht wird. Ausserdem sind Dichtungsbahnen knickbruchanfällig und haben eine sehr geringe Reissdehnung, die schon beim Verlegen der Bahnen auf Flachdächern zu Durchtritten und damit zur Zerstörung der Sperreigenschaften führt. Bei der Herstellung der bituminösen Sperrschichtbahnen führen Kantenbeschädigungen bekanntermassen zu Einrissen, die die Produktion erheblich behindern und verteuern.

Überraschenderweise gelingt es nun gemäss der Erfindung durch Verbundfolien aus wenigstens einer Metallfolie mit einer Dicke von 10 bis 20 μ und wenigstens einer Kunststoffolie als Sperrschicht vollständig gasdichte Dichtungsbahnen herzustellen, deren mechanische Festigkeit um ein Vielfaches gegenüber den bekannten Dichtungsbahnen vergrössert ist.

Die Verbundfolien haben gemäss der Erfindung eine Reissdehnung von 100 bis 115% in Längsrichtung und 30 bis 35% in Querrichtung, gemessen nach DIN 53 455 und eine Zugfestigkeit von wenigstens 90 N/mm², vorzugsweise von 90 bis 100 N/mm² in Längsrichtung und von 150 bis 190 in Querrichtung, gemessen nach DIN 53 455.

Die zur Herstellung der erfindungsgemässen Sperrschicht verwendeten Kunststoffolien sind aus thermoplastischem Material, vorzugsweise aus Polyolefinen wie Polyethylen, Polypropylen und deren Copolymerisaten. Die Metallfolie wird vorzugsweise auf beiden Seiten mit der Kunststoffolie kaschiert nach bekannter Methode, gegebenenfalls unter Einsatz von üblichen Klebern.

Gemäss eines besonders bevorzugten Aufbaus der Sperrschicht wird eine Aluminiumfolie auf beiden Seiten mit einer Mehrschichtfolie belegt, die sich aus einem Trägerfilm aus Polypropylen, vorzugsweise biaxial gereckt, mit einer Dichte von 0,90 bis 0,91 g/m² und jeweils einer Deckschicht aus Polyethylen, vorzugsweise mit hoher Dichte, zusammensetzt.

Dabei wird vorzugsweise zur besseren Haftung zwischen Kunststoffolie und Aluminiumfolie ein üblicher Klebstoff auf Polyurethanbasis mitverwendet.

Insgesamt sollte(n) die Kunststoffolie(n) in der Sperrschicht eine Dicke von 15 bis 40 μ, vorzugsweise von 20 bis 30 μ aufweisen.

Die erfindungsgemässe Sperrschicht wird nach bekannten Methoden zur Dichtungsbahn verarbeitet. Vorzugsweise wird dabei die Sperrschicht einseitig oder beidseitig mit der Beschichtungsmasse getränkt oder beschichtet. Als Beschichtungsmassen eignen sich alle bituminöse Massen, d.h. Stoffe, die Bitumen, Teer und/oder Pech in irgendeinem Prozentsatz enthalten, Bitumen oder Massen, die zur Verklebung gegen Beton geeignet sind, wie z.B. Imprägnier-Bitumen, Deckmassen-Bitumen oder Verschnitt-Bitumen (Pigmente, Füllstoffe, Weichmacher, Kautschuke und Kunststoffe).

Bituminöse Massen und Bitumen werden bevorzugt verwendet, da sich die erfindungsgemässen Dichtungsbahnen insbesondere für Bauwerkabdichtungen, insbesondere Dachdeckungen, eignen. Die entsprechenden Einsatzmethoden sind allgemein bekannt.

Aufgrund ihrer Hitzereflektion und Wasserdampfundurchlässigkeit können die erfindungsgemässen Verbundfolien aber in jede Art von Dichtungsbahn, wie z.B. Dampfdruckausgleichsschichten, eingelagert werden, bei der neben den angegebenen Eigenschaften eine höhere mechanische Belastbarkeit, wie bessere Flexibilität, Knickbruch- und Einreissfestigkeit als bei seinen Metallbandeinlagen, gefordert wird.

*Beispiel:*

Eine 15 μ dicke Alufolie wurde auf einer Trokkenkaschieranlage beidseitig mit einer 25 μ starken Polyethylen/Polypropylen/Polyethylen-3-Schichtfolie kaschiert. Als Haftvermittler diente ein temperaturbeständiger Polyurethanklebstoff mit einem Feststoffgehalt von 30%, gelöst in Ethylacetat. Nachdem nach 2 d der Kleber ausreagiert war, wurde die Alu-Kunststoff-Kombination auf das Fertigmass der späteren Dachdichtungsbahn geschnitten. Bei dieser Verbundfolie wurde die Reissdehnung in Längsrichtung mit 113% und in Querrichtung mit 34% gemessen nach DIN 53 455, und die Zugfestigkeit in Längsrichtung mit 99 N/mm² und in Querrichtung mit 188 N/mm² ermittelt. Die Bahn wurde auf einer Bitumenbeschichtungsanlage beidseitig mit ca. 2 mm Bitumen beschichtet. Die Bitumenbadtemperatur betrug 170°C. Nach dem Auftragen des Bitumens wurde die Bahn besandet, gekühlt und auf 10 m abgelengt aufgewickelt.

Die Bitumenbahn zeigte eine ausgezeichnete Wasserdampfsperrwirkung: Ihre Reisskraft nach DIN 53 455 betrug 73 N/15 mm in Längsrichtung und 101 N/15 mm in Querrichtung. Das entspricht einer Zugfestigkeit, auf die Dicke der gesamten mehrschichtigen Bitumenbahn bezogen, von 1,66 N/mm² in Längsrichtung und 2,29 N/mm² in Querrichtung. Die Reissdehnung in Längsrichtung wurde mit 37% und die Querrichtung mit 10% ermittelt.

## Patentansprüche

1. Dichtungsbahnen, insbesondere bituminöse Dichtungsbahnen, die eine Sperrschicht aus mindestens einer Kunststoff-Metall-Verbundfolie enthalten, dadurch gekennzeichnet, dass sie als Sperrschicht eine Verbundfolie aus wenigstens einer Metallfolie mit einer Dicke von 10 bis 20 μm und wenigstens einer Kunststoffolie enthalten, wobei die Verbundfolie eine Reissdehnung von 100-115% in Längsrichtung und 30-35% in Querrichtung, gemessen nach DIN 53 455, und eine Zugfestigkeit von wenigstens 90 N/mm² in Längsrichtung und 150-190 in Querrichtung gemessen, nach DIN 53 455, hat.

2. Dichtungsbahnen nach Anspruch 1, dadurch gekennzeichnet, dass die Metallfolie eine Aluminiumfolie ist.

3. Dichtungsbahnen nach Ansprüchen 1 und 2, dadurch gekennzeichnet, dass die Kunststoffolie ein thermoplastisches Material ist.

4. Dichtungsbahnen nach Ansprüchen 1 bis 3, dadurch gekennzeichnet, dass die Kunststoffolie aus Polyolefinen hergestellt worden ist.

5. Dichtungsbahnen nach Ansprüchen 1 bis 4, dadurch gekennzeichnet, dass sie als Sperrschicht eine Verbundfolie aus einer Aluminiumfolie, die auf beiden Seiten mit einer Mehrschichtfolie bestehend aus einer Polypropylenträgerfolie und je einer Polyethylendeckfolie und gegebenenfalls üblichen Haftvermittlerschichten belegt ist, enthält.

6. Dichtungsbahnen nach Ansprüchen 1 bis 5, dadurch gekennzeichnet, dass die Sperrschicht in bituminöse Massen oder Bitumen eingelagert ist.

7. Verwendung der Dichtungsbahnen nach Ansprüchen 1 bis 6 für Bauwerkabdichtungen, insbesondere Dachdeckungen.

## Claims

1. Damp-proof courses, in particular bituminous damp-proof courses, which contain an impervious layer consisting of at least one plastic/metal composite foil, characterised in that they contain as the impervious layer a composite foil consisting of at least one metal foil of a thickness of 10 to 20 μm and at least one plastic film, the composite foil having an elongation at break of 100-115% in the longitudinal direction and 30-35% in the transverse direction, mesured according to DIN (German Industrial Standard) 53 455, and a tensile strength of at least 90 N/mm² in the longitudinal direction and 150-190 in the transverse direction measured according to DIN 53 455.

2. Damp-proof courses according to claim 1, characterised in that the metal foil is an aluminium foil.

3. Damp-proof courses according to claims 1 and 2, characterised in that the plastic film is a thermoplastic material.

4. Damp-proof courses according to claims 1 to 3, characterised in that the plastic film has been produced from polyolefins.

5. Damp-proof courses according to claims 1 to 4, characterised in that it contains as the impervious layer a composite foil comprising an aluminium foil which is covered on each side with a multilayer film consisting of a polypropylene carrier film and in each case a polyethylene covering film and if necessary conventional adhesive layers.

6. Damp-proof courses according to claims 1 to 5, characterised in that the impervious layer is embedded in bituminous materials or bitumen.

7. Use of the damp-proof courses according to claims 1 to 6 for sealings for buildings, in particular roofings.

## Revendications

1. Bandes d'étanchéité, en particulier bandes d'étanchéité bitumineuses contenant une couche d'arrêt constituée d'au moins une feuille composite de matière synthétique/métal, caractérisées en ce que, comme couche d'arrêt, elles contiennent une feuille composite constituée d'au moins une feuille métallique d'une épaisseur de 10 à 20 μm et d'au moins une feuille de matière synthétique, la feuille composite ayant un allongement à la déchirure de 100-115% dans le sens longitudinal et de 30-35% dans le sens transversal, mesuré suivant la norme DIN 53 455, ainsi qu'une résistance à la traction d'au moins 90 N/mm² dans le sens longitudinal et de 150-190 N/mm² dans le sens transversal, mesuré suivant la norme DIN 53 455.

2. Bandes d'étanchéité suivant la revendication 1, caractérisées en ce que la feuille métallique est une feuille d'aluminium.

3. Bandes d'étanchéité suivant les revendications 1 et 2, caractérisées en ce que la feuille de matière synthétique est une matière thermoplastique.

4. Bandes d'étanchéité suivant les revendications 1 à 3, caractérisées en ce que la feuille de matière synthétique est réalisée à partir de polyoléfines.

5. Bandes d'étanchéité suivant les revendications 1 à 4, caractérisées en ce que, comme couche d'arrêt, elles contiennent une feuille composite constituée d'une feuille d'aluminium recouverte, sur les deux faces, d'une feuille à plusieurs couches constituée d'une feuille support de polypropylène et chaque fois d'une feuille de recouvrement de polyéthylène, ainsi qu'éventuellement de couches habituelles de collage.

6. Bandes d'étanchéité suivant les revendications 1 à 5, caractérisées en ce que la couche d'arrêt est incorporée dans du bitume ou des masses bitumineuses.

7. Utilisation des bandes d'étanchéité suivant les revendications 1 à 6 pour les étanchements en construction, en particulier pour les recouvrements de toitures.